# EUROPÄISCHE PATENTSCHRIFT

(11) **EP 0 501 230 B1**
(45) Veröffentlichungstag und Bekanntmachung des Hinweises auf die Patenterteilung: **18.09.1996**
(21) Anmeldenummer: 92102367.7
(22) Anmeldetag: 13.02.1992
(51) Int. Cl.: C08L 81/02

(54) **Mischungen aus Polyarylensulfiden, min. Füll-, bzw. anorg. oder org. Hilfsstoffen und Polymaleimiden**
Blends of polyarylene sulphides, mineral fillers or further inorg. or organic additives and polymaleimides
mélanges de polysulfures d'arylène, de charges minérales ou d' additifs organiques ou inorganiques et de polymaleimides

(30) Priorität: 26.02.1991 DE 4105913
(43) Veröffentlichungstag der Anmeldung: 02.09.1992
(73) Patentinhaber: BAYER AG, 51368 Leverkusen (DE)
(72) Erfinder: Köhler, Burkhard, Dr., W-4150 Krefeld 11 (DE); Imai, Seisaku, Dr., W-5090 Leverkusen 1 (DE); Döring, Joachim, Dr., Minatoku, Tokyo 108 (JP); Rüsseler, Wolfgang, Dr., W-4150 Krefeld (DE); Dorf, Ernst-Ullrich, Dr., W-4150 Krefeld (DE)

(56) Entgegenhaltungen:
- EP-A- 0 275 991
- EP-A- 0 396 935
- EP-A- 0 398 533
- CHEMICAL ABSTRACTS, vol. 107, no. 6, 10. August 1992, Columbus, Ohio, US; abstract no. 40822D, Y.ONUMA ET AL: 'SYNTHESIS AND PROPERTIES OF NEW POLYFUNCTIONAL MALEIMIDE' Seite 34 ;Spalte 2 ;

## Beschreibung

Die Erfindung betrifft Mischungen aus Polyarylensulfiden, Polymaleinimiden und gegebenenfalls anderen Zusätzen. Die Mischungen zeichnen sich durch gute mechanische Eigenschaften aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bislang Duroplasten vorbehalten waren.

PPS hat mechanische Eigenschaften, die für einige Anwendungen z.B. im Spritzgußbereich unzureichend sind. Insbesondere sind Biege- oder Zugfestigkeit, Randfaserdehnung, Schlagzähigkeit und Elastizitätsmodul für die Praxis häufig nicht ausreichend. Es hat sich daher als Vorteil erwiesen, PPS z.B. durch Abmischung mit anderen Thermoplasten, z.B. mit Polycarbonaten in den genannten Eigenschaften zu verbessern (z.B. JP-A 51-59952, EP-A 104 543, US-A 4 021 596).

Für bestimmte Anwendungsgebiete ist das Eigenschaftsprofil derartiger Abmischungen jedoch nicht immer ganz befriedigend.

Es ist bekannt, daß PPS sich durch Abmischung mit Maleinimiden in seinen Eigenschaften modifizieren läßt. Meist wird dabei eine Verzweigung von PPS bewirkt, da z.B. PPS unter oxidativen Bedingungen mit Maleinimiden umgesetzt wird (JP-A 6 319 1858) oder PPS mit Verbindungen umgesetzt wird, die mindestens drei Maleinimidgruppen und einen Triazinring enthalten (z.B. JP-A 62 062 861).

Es wurde nun gefunden, daß Abmischungen von Polyarylensulfiden (PAS), vorzugsweise von Polyphenylensulfid (PPS) mit geringen Mengen an Maleinimiden und gegebenenfalls anderen Zusatzstoffen sich durch ihre mechanischen Eigenschaften, z.B. Zähigkeit, Biegefestigkeit, Randfaserdehnung usw. besonders auszeichnen.

Gegenstand der Erfindung sind daher Mischungen aus
A) 99,9 bis 20 Gew.-%, bevorzugt
   90 bis 20 Gew.-% unverzweigten, sulfongruppenfreien Polyarylensulfiden, bevorzugt PPS,
B) 0,1 bis 40 Gew.-%, bevorzugt
   0,5 bis 5 Gew.-% eines Maleinimids der Formel (I) 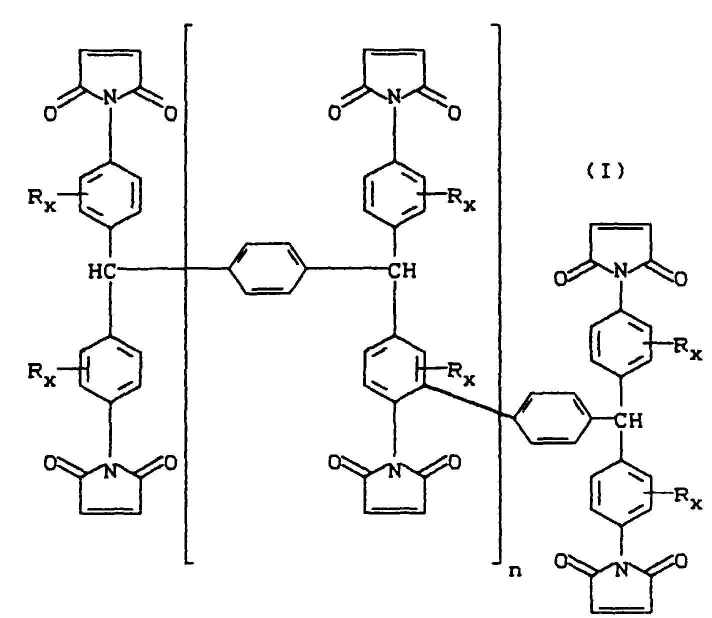 in welcher
   - R: gleich oder verschieden sein können und Wasserstoff, C₁-C₂₂-Alkyl, bevorzugt Methyl, C₆-C₁₄-Aryl, bevorzugt Phenyl oder C₁-C₂₂-Aralkyl oder C₇-C₂₂-Alkylaryl, besonders bevorzugt Wasserstoff oder Methyl bedeuten,
   - x: für die Zahl 1, 2, 3 oder 4 steht,
   und
   - n: für eine Zahl von 0 bis 10, vorzugsweise für 0 steht,
C)
   - 9: bis 79,9 Gew.-%, bevorzugt
   - 9,9: bis 79,9 Gew.-% mineralische Füll- und Verstärkungsstoffen und/oder anorganischen oder organischen Hilfsstoffen.

Ein Beispiel für erfindungsgemäße Stoffe der Formel (I) ist das bei der Firma Mitsubishi Petrochemical Co. erhältliche Polyimid MP-2000 X®.

Mineralische Füllstoffe oder Zusatzstofe sind z.B. Glimmer, Microtalk, Talkum, Quarzmehl, Metalloxide und -sulfide, wie z.B. TiO₂, ZnO, ZnS, Graphit, Ruß, Fasern aus z.B. Quarz und Kohle, Carbonate wie MgCO₃, CaCO₃ oder Sulfate, z.B. CaSO₄, BaSO₄, Glasfasern, Glaskugeln usw.

Erfindungsgemäß können z.B. handelsübliche, gegebenenfalls auf übliche Art geschlichtete Glasfasern eingesetzt. Sie haben einen Durchmesser von 1 bis 20 µm, bevorzugt 1,5 bis 10 µm. Es können auch Endlosfasern eingesetzt werden und/oder Herstellungsverfahren gewählt werden, bei denen die Länge der Fasern in der fertigen erfindungsgemäßen Abmischung dann 0,05 bis 10, bevorzugt 0,1 bis 2 mm beträgt. Es können auch Endlosfasern (Rovings) eingesetzt werden in Verfahren zur Herstellung von endlosverstarktem Unidirektionalverbund.

Gegebenenfalls können auch anstelle der Glasfasern handelsübliche Glaskugeln eingesetzt werden, z.B. Ballotini-Glaskugeln. Diese können auch bevorzugt in Mischung mit Glasfasern als weitere mineralische Füllstoffe dienen.

Als weitere übliche Zusatzstoffe können Pigmente, Entformungsmittel, E-Wachse, Fließhilfsmittel, Nucleierungsmittel oder Stabilisatoren eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

### Beispiele

Die Herstellung der erfindungsgemäßen Mischungen erfolgte auf einem Doppelwellenextruder ZSK 32 von Werner und Pfleiderer bei 320°C.

Das verwendendete PPS wies eine Schmelzviskosität von 59 PA.s (306°C), Schubspannung = 1.000 s⁻¹ auf und wurde nach EP-A 171 021 hergestellt.

Als Polymaleinimid wurde das Polyimid MP-2000 X® der Mitsubishi Petrochemical Co. eingesetzt.

Als Glasfasern wurde die geschlichtete Schnittglasfaser Bayer CS 7916® zu 40 Gew.-% eingesetzt.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biege-E-Modul und Schlagzähigkeit aₙ (reversed notched ISO 180) untersucht.

### Vergleichsbeispiel 1

Gemischt wurden 60 % PPS mit den Füllstoffen.

### Beispiel 1

Gemischt wurden 59 % PPS und 1 % MP-2000 X® mit den Füllstoffen.

| Beispiel | Biegefestigkeit MPa | Randfaserdehnung % | E-Modul MPa | Izod-Schlagzähigkeit kJ/m² |
|---|---|---|---|---|
| Vergl. 1 | 249 | 1,86 | 13.060 | 28,5 |
| Bsp. 1 | 318 | 2,48 | 13.470 | 49,9 |

## Patentansprüche

1. Mischungen aus
A) 99,9 bis 20 Gew.-% unverzweigten, sulfongruppenfreien Polyarylensulfiden
B) 0,1 bis 40 Gew.-% eines Maleinimids der Formel (I) 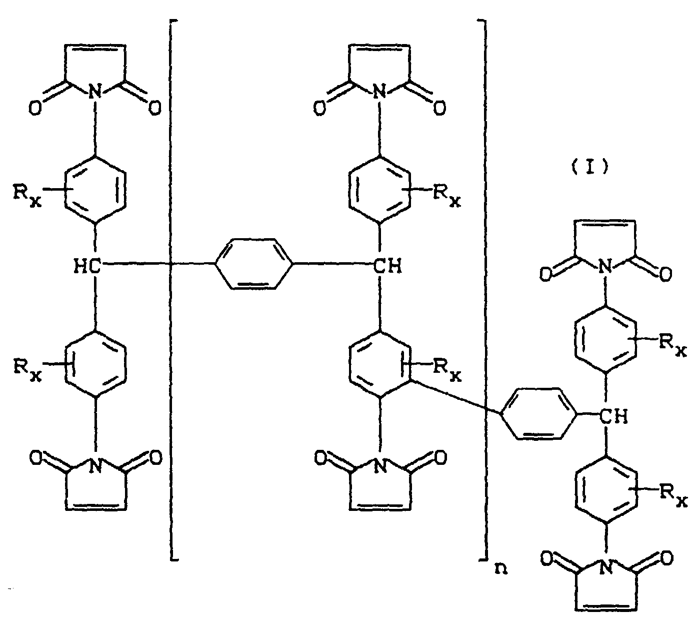 in welcher
R gleich oder verschieden sein können und Wasserstoff, C₁-C₂₂-Alkyl, C₆-C₁₄-Aryl, oder C₇-C₂₂-Aralkyl oder C₇-C₂₂-Alkylaryl bedeuten,
x für die Zahl 1, 2, 3 oder 4 steht,
und
n für eine Zahl von 0 bis 10 steht,
C) 9 bis 79,9 Gew.-% mineralische Füll- und Verstärkungsstoffen und/oder anorganischen oder organischen Hilfsstoffen.

2. Verwendung der Mischungen nach Anspruch 1 zur Herstellung geformter Körper.

## Claims

1. Blends prepared from
A) 99.9 to 20 wt.% of unbranched polyarylene sulphides containing no sulphone groups
B) 0.1 to 40 wt.% of a maleimide of the formula (I) 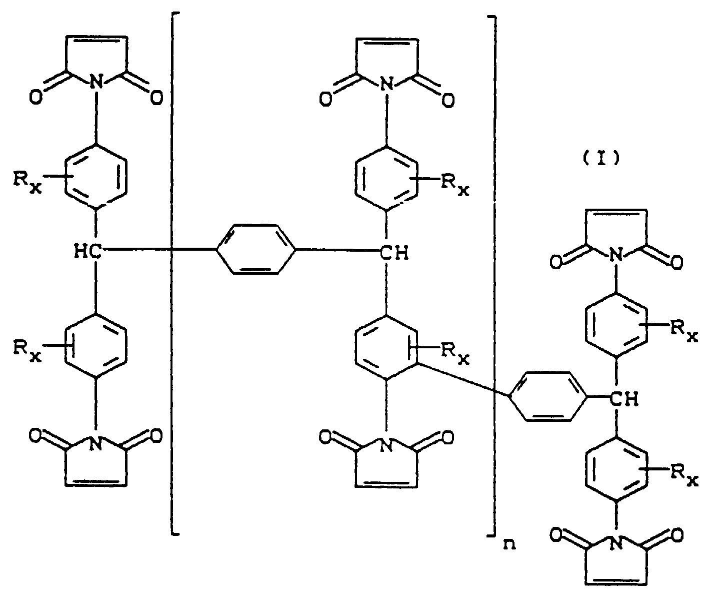 in which
R may be identical or different and mean hydrogen, C₁-C₂₂ alkyl, C₆-C₁₄ aryl or C₇-C₂₂ aralkyl or C₇-C₂₂ alkylaryl,
x denotes the number 1, 2, 3 or 4,
and
n denotes a number from 0 to 10,
C) 9 to 79.9 wt.% of mineral fillers and reinforcing materials and/or inorganic or organic auxiliaries.

2. Use of the blends according to claim 1 for the production of shaped articles.

## Revendications

1. Mélanges de
A) 99,9 à 20% en poids de polyarylènesulfures non ramifiés, exempts de groupes sulfonyle,
B) 0,1 à 40% en poids d'un maléimide de formule (I) 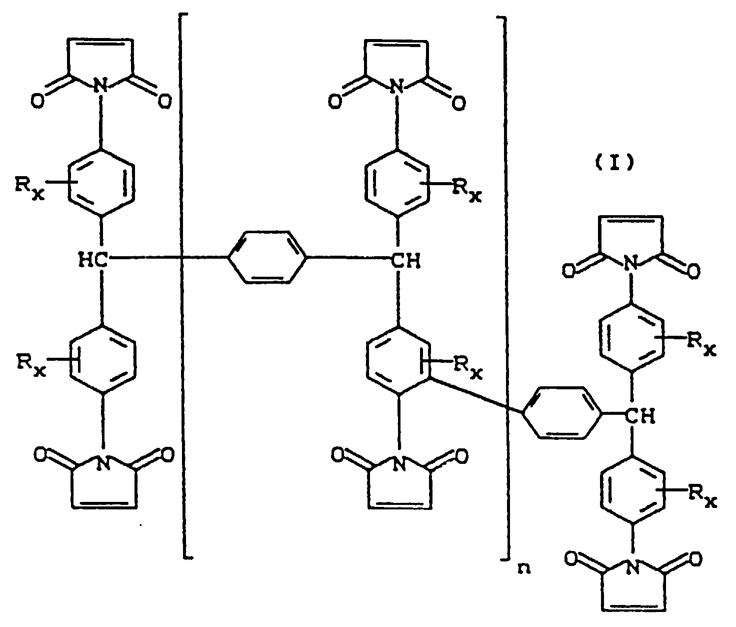 dans laquelle
R peuvent être identiques ou différents et représentent un atome d'hydrogène, un groupe alkyle en C₁-C₂₂, un groupe aryle en C₆-C₁₄ ou un groupe aralkyle en C₇-C₂₂, ou encore un groupe alkylaryle en C₇-C₂₂,
x représente le nombre 1, 2, 3 ou 4, et
n représente un nombre de 0 à 10,
C) 9 à 79,9% en poids de substances minérales de remplissage et de renforcement et/ou de substances auxiliaires inorganiques ou organiques.

2. Utilisation des mélanges selon la revendication 1 pour la préparation de corps moulés.
